# EUROPEAN PATENT SPECIFICATION

(11) **EP 3 619 039 B1**
(45) Date of publication and mention of the grant of the patent: **14.04.2021**
(21) Application number: 18728229.8
(22) Date of filing: 27.04.2018
(51) Int. Cl.: B32B 7/12, B32B 27/08, B32B 27/32, B65D 65/40

(54) **MULTILAYER ADHESIVE MATERIAL FOR FOOD USE**
MEHRSCHICHTIGES KLEBEMATERIAL FÜR LEBENSMITTELVERWENDUNG
MATÉRIAU ADHÉSIF MULTICOUCHE À USAGE ALIMENTAIRE

(30) Priority: 02.05.2017 IT 201700047007
(43) Date of publication of application: 11.03.2020
(73) Proprietor: Irplast S.p.A., 50053 Empoli (Firenze) (IT)
(72) Inventor: CASTIELLO, Stefania, 56029 Santa Croce Sull'Arno (pisa) (IT); DE BARTOLO, Luca, 46012 Bozzolo (Mantova) (IT); LOTTINI, Elisabetta, 50059 Sovigliana Vinci (Firenze) (IT)
(74) Representative: Modiano, Micaela Nadia
(86) International application number: PCT/IB2018/052935
(87) International publication number: WO 2018/203198

(56) References cited:
- EP-A2- 1 074 593
- EP-B1- 0 928 273
- US-A1- 2004 077 759
- US-A1- 2016 339 663

## Description

### Technical Field

The present invention relates to a coupled multilayer adhesive material suitable for food contact, which is particularly suitable for the preparation of rolls of adhesive material usable for wrapping and grouping food products, in particular horticultural products.

### Prior Art

Many horticultural products are placed on the market using primary packaging such as, for example, trays and bags, made of cardboard, plastic material or composite materials. This type of solution is especially adopted for horticultural products intended for sale in large scale retail, where the consumer picks directly the products already packaged, sometimes already weighed and priced.

As well as having a containing function, primary packaging also performs the further function of conveying a series of technical and commercial information useful for the end consumer, which cannot be affixed directly to the product, such as for example the expiry date, the bar code and the identification of the product's origin, through the producer's logo, etc. Packaging for horticultural products must be stable, i.e. maintain its functions, both at ambient temperature, and at the chilled storage temperature of the products, which can reach 2°/4°C.

Finally, any material used for packaging or grouping horticultural products intended for human or animal food, must be suitable for contact with food, in particular fulfilling the requirements envisaged by relevant national and EU regulations, for example EU Regulations 1935/2004, UE 2023/2006 and amendments and the more specific EU Regulation UE 10/2011 and amendments, concerning plastic packaging.

However, the packaging solutions normally adopted for these products generate a notable quantity of packaging waste, whose management has a notable environmental and economic impact, both for the producers and for the general public.

For this reason, the problem of reducing packaging is at the forefront for the industries that deal with the packaging of goods, also in the agri-food sector.

In various industrial sectors, packaging solutions have been adopted for some time, which allow objects of the most varied shapes and sizes to be grouped using films or bands made of plastic material placed in direct contact with the products to be packaged.

Patent application EP1074593A2, in the name of the Applicant, describes for example a band made of a printed plastic material for grouping articles in which the side of the band that is placed in contact with the articles to be grouped is covered in temperature-sensitive acrylic adhesive arranged in transverse stripes with respect to the length of the band. However, the band is not suitable for use in contact with food, in particular horticultural products, since the acrylic adhesive used leaves residues when the band is removed from the products. Furthermore, the printing on the opposite side with respect to the side with the adhesive is not shielded in any way and can be transferred onto the adhesive when the latter is wrapped in a band, thus also contaminating the horticultural product onto which the band is applied.

Patent EP1862518B2, also in the name of the Applicant, describes a BOPP film which can be printed and made adhesive using a pressure-sensitive adhesive. However, in order for the film to be usable for grouping articles, it must heat shrink at temperatures of 20°-200°C.

Patent EP928273 describes a band made of plastic material printed on one side and covered with adhesive on the opposite side, which can be used to group containers, particularly bottles. However, this band is not suitable for grouping horticultural products either, since the adhesive, which could be a pressure-sensitive acrylic resin or a "hot melt" adhesive, leaves residues when applied to horticultural products. Furthermore, the printed side of the band can be covered with a lacquer which, like ink, can be transferred onto the adhesive when the band is wound into rolls and contaminate the horticultural product.

In this context, the technical task underpinning the present invention is to propose a material (suitable) for contact with food that can be used in particular for wrapping or grouping horticultural products, with a primary packaging function, i.e. packaging placed in direct contact with the product to be contained.

A further technical task of the present invention is to propose a material (suitable) for contact with food that can be printed and used for wrapping, in particular grouping, food products without contaminating the products themselves with the inks used for printing.

A further aim of the present invention is to propose an adhesive material able to guarantee a sufficient seal of the closure, including in high moist and low-temperature conditions.

Another object of the present invention is to provide a material suitable for contact with food that can be used for producing a roll of adhesive material, in particular for producing a roll of linerless adhesive material suitable for manual applications with a dispenser or for use on taping and packaging machines.

### Aim of the invention

The stated technical task and specified aims are substantially achieved by a multilayer adhesive material (suitable) for food contact, comprising:
- a polyolefin film 14 having a first surface 14a and a second surface 14b opposite the first;
- a polyolefin film 11 coupled to the polyolefin film 14 on the first surface 14a by means of a layer 13 comprising at least a first adhesive;
- a layer 12 comprising at least one ink interposed between the polyolefin films 11 and 14; and
- an adhesive layer 15 comprising at least one pressure-sensitive hot-melt adhesive arranged on the second surface 14b of the polyolefin film 14, wherein said at least one pressure-sensitive hot-melt adhesive has a hot shear value ≥ 60 min., preferably ≥ 100 min., more preferably ≥ 300 min.

The Applicant has found that the multilayer adhesive material described above can be advantageously used for producing rolls of linerless adhesive material, suitable for contact with food, which can be used for wrapping and/or grouping food products, in particular horticultural products, by placing the adhesive layer 15 in direct contact with the products, without leaving any residue when the adhesive material is removed.

### Brief description of the drawings

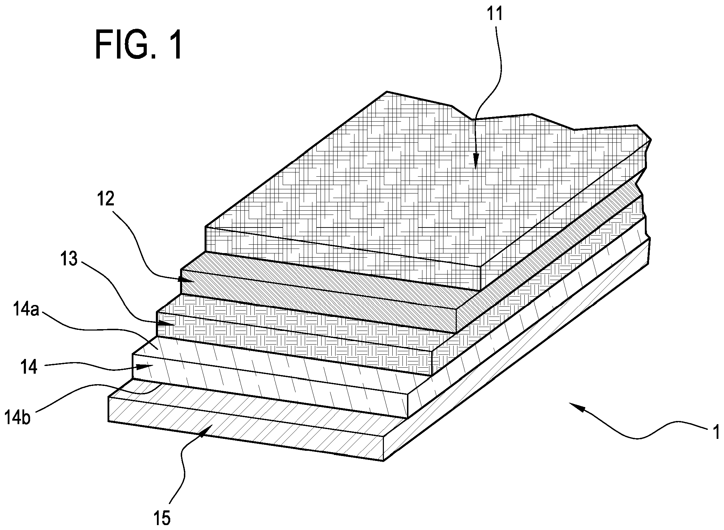

The present invention will be described in detail below also with the aid of the appended figure 1 and with illustrative and non-limiting examples. In particular, the appended figure 1 schematically represents a preferred embodiment of the multilayer adhesive material according to the invention.

### Detailed description of preferred embodiments of the invention

In the present description, the claims and the appended figure, the multilayer adhesive material for food contact can be indicated overall as adhesive material 1.

In the appended figure 1, the relative thicknesses of the different layers that compose the adhesive material 1 are disclosed merely by way of example and are not to be considered realistic.

In the present description and the appended claims, the percentages are considered to be expressed by weight, unless otherwise indicated.

In the present description and appended claims, the expression "BOPP film" relates to a multilayer biaxially oriented polypropylene film.

In the context of the present invention, the expression "material suitable for food contact" refers to a material which has an overall migration of substances in 3% acetic acid, in 10% ethanol and in rectified olive oil of less than 10 mg/dm², in which the overall migration is determined at 40°C for a contact time of 10 days, according to the provisions of UNI EN 1186-1:2003, UNI EN 1186-4:2003 and UNI EN 1186-5:2003 standards.

In a first aspect thereof, the present invention relates to a multilayer adhesive material (suitable) for food contact comprising:
- a polyolefin film 14 having a first surface 14a and a second surface 14b opposite the first;
- a polyolefin film 11 coupled to the polyolefin film 14 on the first surface 14a by means of a layer 13 comprising at least one adhesive;
- a layer 12 comprising at least one ink interposed between the polyolefin films 11 and 14; and
- an adhesive layer comprising at least one pressure-sensitive hot-melt adhesive (hereinafter PSA "Pressure Sensitive Adhesive") 15 arranged on the second surface 14b of the polyolefin film 14, wherein said at least one hot-melt PSA has a hot shear value of greater than or equal to 60 min., preferably greater than or equal to 100 min., more preferably greater than or equal to 300 min., the hot shear value being measured on steel at 40°C according to the method described in the following.

In one embodiment, the adhesive layer 15 may comprise at least one PSA hot-melt adhesive having at least one of the following properties:
- rolling ball-tack of less than or equal to about 2.0 cm (measured according to the ASTM D3121 method); and/or
- a softening temperature (ASTM D36) of about 75°-105°C; and/or
- a viscosity of about 5000 - 15000 mPas (measured according to the ASTM D3236 method with a Brookfield RVTDV II viscometer at 160°C, spindle no. 4-28, speed 20 rpm).

In one embodiment, the adhesive layer 15 may comprise at least one PSA hot-melt adhesive having all of the above-described properties.

The Applicant has surprisingly found that given a same rolling ball-tack value, when the adhesive layer 15 comprises a PSA hot-melt adhesive the hot shear value of which is lower than 60 min., the adhesiveness of the material is insufficient to enable wrapping or long-lasting grouping of horticultural products intended to be repeatedly handled, in particular when the material is superposed "adhesive on adhesive", i.e. by placing the adhesive layer 15 in contact with the adhesive layer 15, a closing method generally adopted on automatic taping machines.

For hot shear values that are greater than or equal to about 60 min., the adhesiveness of the material is sufficient to enable wrapping or grouping of horticultural products intended to be handled, in particular when the material is superposed "adhesive on back", i.e. placing the adhesive layer 15 in contact with the polyolefin film 11. Further, the adhesive material 1 can be used for wrapping and/or grouping horticultural products by placing the adhesive layer 15 in direct contact with the products, without leaving residues of adhesive on the products when the adhesive material is removed.

The Applicant has surprising found that for hot shear values that are greater than or equal to about 100 min., the adhesiveness of the material is such as to allow an effective seal of the superposing (closing) of the "adhesive on adhesive" configuration, including at low temperature (2/4°C). For hot shear values of greater than or equal to 300 min., the adhesiveness of the material according to the invention on itself is optimal in a wide range of temperatures (about 2°-40°C), as well as in conditions of high moisture, as well as by placing the adhesive layer 15 in direct contact with wet food products, such as fresh fruit and vegetables.

In one embodiment, the pressure-sensitive adhesive comprised in the adhesive layer 15 may be removable from the food product, in particular from the horticultural food product, wrapped/grouped, without leaving residues on the surface of said product.

In one embodiment, the adhesive layer 15 may comprise at least one PSA hot-melt adhesive comprising:
(a) about 12.0 - 55.0% by weight, preferably about 44.0 - 52.0%, of at least a thermoplastic elastomer, preferably at least a styrenic block copolymer selected from among styrene-isoprene-styrene copolymer (SIS), styrene-isoprene/butadiene-styrene copolymer (SIBS), styrene-butadiene-styrene copolymer (SBS), styrene-ethylene/butylene-styrene copolymer (SEBS), styrene-butadiene rubber (SBR) and mixtures thereof, preferably at least a styrene-isoprene-styrene copolymer; and
(b) about 45.0 - 88.0% by weight, preferably about 55.0 - 88.0% by weight, more preferably about 48.0 - 56.0 % by weight, of at least a resin selected from among colophony resins, polyterpene resins, hydrocarbon resins and mixtures thereof,
wherein the percentages by weight are expressed with respect to the sum of the weights of components (a) and (b).

In an embodiment, the bonded styrene content comprised in the at least a thermoplastic elastomer (a) can be about 13.0 - 30.0% by weight, preferably about 17.0 - 21.0% by weight, with respect to the overall weight of the elastomer.

The Melt Flow Rate (220°C/5Kg) of the elastomer (a) can be comprised in the range of about 5.0-10.0 g/10 min, preferably about 11.0-13.0 g/10 min (ASTM D1238).

In one embodiment, the at least a resin (b) can be selected from among at least a hydrocarbon resin C5, at least a hydrocarbon resin C9 and mixtures thereof, preferably it can be a mixture of at least a resin C5 and at least a resin C9.

The softening point of the at least a resin can be about 50°-150°C, preferably about 80°-120°C (ASTM D6493).

The thermoplastic elastomers (a) and the resin (b) are products known to a person skilled in the art and available on the market.

The at least one PSA hot-melt adhesive must be suitable for contact with food according to the provisions of EU reference legislation (EU Regulation 10/2011).

As well as the components (a) and (b) described above, the at least a PSA hot-melt adhesive can further comprise additives known in the prior art, such as for example plasticisers, tackifiers, antioxidants and mixtures thereof, as long as such further additives make the PSA hot-melt adhesive unsuitable for contact with food.

The PSA hot-melt adhesive can be prepared by mixing the above-mentioned components, for example in a screw extruder, by using process parameters that can easily be determined by a person skilled in the art on the basis of the average knowledge of the sector.

The adhesive layer 15 may be continuous or discontinuous, preferably continuous. When discontinuous, the adhesive layer 15 may be arranged on the surface 14b of the polyolefin film 14 transversally, obliquely or longitudinally with respect to the greatest dimension of the adhesive material.

The quantity of at least a PSA hot-melt adhesive comprised in the adhesive layer 15 can be of about 5-50 g/m² per unit of area covered by adhesive, preferably about 10-30 g/m², more preferably about 14-22 g/m², even more preferably about 18 g/m².

The adhesive material can be wound in rolls, even large ones, preferably in rolls wherein the adhesive material is linerless, which can be easily unwound without the adhesive layer 15 leaving residues on the surface of the polyolefin film 11 with which it is in contact when the roll is wound.

In an embodiment, the adhesive material 1 can comprise a further layer 16 comprising at least a detaching agent, preferably comprising polycarbamate, in which the layer 16 is arranged on the surface of the polyolefin film 11 opposite the surface on which the polyolefin film 14 is coupled.

The layer 16 facilitates the unwinding when the adhesive material 1 is wound in linerless rolls. Materials useful as detaching agents of the layer 16 are known in the art and available on the market and can be applied on the layer 11 using methods known in the sector.

The layer 12 comprising at least one ink is advantageously interposed between the layer 14 and the layer 11. The configuration adopted has the advantage that the polyolefin film 11 shields the layer 12, protecting it from scratches and abrasions, i.e. from the deterioration of the print quality. Furthermore, transferring the at least one ink of the layer 12 on the adhesive layer 15 when the adhesive material is wound in rolls is prevented by the presence of the polyolefin film 11. The at least one ink of the layer 12 may be an ink known to a person skilled in the art, of the type normally used for printing on polyolefin films, such as, for example, water- or solvent-based inks available on the market, generally containing nitrocellulose and polyurethane resins. The layer 12 may be continuous or, preferably, discontinuous, forming text, graphical elements, etc. The layer 12 may be arranged (applied) onto the surface 14a of the polyolefin film 14 or onto the surface of the polyolefin film 11 intended to (configured to) be coupled to the polyolefin film 14. In a preferred embodiment, schematically illustrated in figure 1, the layer 12 comprising at least one ink may be arranged on the surface of the polyolefin film 11 intended to be coupled to the polyolefin film 14. The layer 12 may be arranged (applied) between the polyolefin film 11 and 14 by methods and equipment known to a person skilled in the art, for example by flexographic printing.

The layer 13 may comprise at least one lamination adhesive, of the type normally used in the plastic film sector for the coupling (lamination) of polyolefin films, such as, for example, a thermoplastic adhesive, among which for example polymers and copolymers of vinyl acetate and/or vinyl chloride, or a thermosetting adhesive, such as, for example, polyester or polyurethane based resins. Normally, such adhesives are available on the market. In one embodiment, the layer 13 may comprise at least one solvent-free polyurethane adhesive, preferably at least one two-component polyurethane adhesive. Alternatively, the layer 13 may comprise at least one adhesive for dry lamination, of the type normally used in the sector. The layer 13, preferably continuous, may be included in the adhesive material in quantities of about 0.5-3.0 g/m², preferably about 1.0 g/m².

In one embodiment, the polyolefin film 11 and/or the polyolefin film 14 may be a BOPP film comprising at least three layers A/B/C, wherein:
- the layer (A) and the layer (C) comprise at least one propylene polymer independently selected from propylene homopolymer, copolymers of propylene with at least one comonomer selected from among ethylene and linear or branched C4-C12 alpha-olefins, and mixtures thereof; and
- the layer (B) comprises at least one propylene polymer with MFR less than or equal to 3g/10min. (230°C/2.16 kg) selected from propylene homopolymer, copolymers of propylene with at least one comonomer selected from ethylene and linear or branched C4-C12 alpha-olefins, and mixtures thereof.

Preferably, the polyolefin film 11 and the polyolefin film 14 are both BOPP films as described above.

At least one of the layers (A), (B) or (C) of the polyolefin film 11 and/or the polyolefin film 14 may comprise at least one copolymer of propylene selected from among copolymers of propylene with at least one comonomer selected from ethylene and linear or branched C4-C8 alpha-olefins, and mixtures thereof. The at least one comonomer can be selected from ethylene, butene (preferably 1-butene), hexene, octene and mixtures thereof. The total quantity of at least one comonomer in the copolymer may be about 0.5-25% by weight, preferably about 1-7% by weight with respect to the weight of the copolymer.

Optionally, at least one of the copolymers of propylene of layers (A), (B) or (C) of the polyolefin film 11 and/or the polyolefin film 14 can further comprise at least one comonomer derived from a C4-C20 diene preferably selected from linear diene (preferably conjugated linear diene), branched diene (preferably conjugated branched diene), cyclic diene, vinyl cycloalkene, vinyl aromatic diene, heteroaromatic diene, vinyl heteroaromatic diene and mixtures thereof, more preferably selected from cyclopentadiene, 2-methyl-1,3-butadiene and mixtures thereof, preferably in quantities of about 0.5-10% by moles.

Optionally, layer (A) and/or layer (C) of the polyolefin film 11 and/or the polyolefin film 14 may comprise at least one slip agent and/or antiblocking agent, preferably selected from:
- organic slip agent and/or antiblocking agent, more preferably polymethylmethacrylate (PMMA), optionally in the form of spherical particles having a mean diameter of about 2-8 µm, preferably 3-5 µm;
- organo-inorganic slip agent and/or antiblocking agent, more preferably a polyorganosiloxane;
- inorganic slip agent and/or antiblocking agent, more preferably silica, optionally in the form of spherical particles having a mean diameter of about 2-8 µm, preferably 3-5 µm; and
- mixtures thereof.

Generally, the slip agents and/or antiblocking agents can be added to the at least one propylene polymer in the form of at least one masterbatch comprising about 3-30% by weight of slip agent and/or antiblocking agent with respect to the weight of the masterbatch itself, the remaining part of the masterbatch being a propylene polymer. The total quantity of slip and/or antiblocking masterbatch that may be present in a layer may be about ≤ 3% by weight, preferably about 0.5-2.5% by weight. The quantities of slip and/or antiblocking masterbatch indicated allow even large rolls of adhesive material to be obtained without any roll unwinding problems either in manual applications or in applications with taping/labelling machines.

According to one embodiment, the slip and/or antiblocking masterbatch can be selected from Polybatch® ABVT 26 NSC, Polybatch® ABVT 30 NSC, Polybatch® ABVT 19 NSC (A. Schulman Inc.), Constab AB06001 PP, Constab AB06084 PPR, Constab AB06060 PPR (Constab Polyolefin Additives GmbH), Skiblock 10 (Ampacet Corp.), and mixtures thereof.

In one embodiment, the layers (A) and (C) of the polyolefin film 11 and of the polyolefin film 14 may comprise at least one slip agent and/or antiblocking agent, independently selected from among those described above.

Optionally, and preferably, layer (A) and/or layer (C) of the polyolefin film 11 and/or the polyolefin film 14 may be subjected to a surface treatment for increasing the surface tension and improving the printability of the film e.g. at least a corona or flame treatment, according to methods known to a person skilled in the art. In one embodiment, the polyolefin film 14 may undergo a flame treatment on the surface 14a and a corona treatment on the surface 14b, thus promoting the adhesion of the layers 13 and 15.

In one embodiment, the central layer (B) of the polyolefin film 11 and/or the polyolefin film 14, preferably the central layer of both the polyolefin films 11 and 14 may comprise at least one propylene homopolymer, wherein said propylene homopolymer preferably has a softening temperature Vicat of greater than or equal to 145°C (ISO 306), more preferably comprised between 145°C and 160°C, even more preferably comprised between 150°C and 155°C.

When the central layer (B) comprises a propylene homopolymer as described above, said central layer (B) may further comprise at least one amorphous hydrocarbon resin. Said resin can have a softening point of about 130°-180°C, more preferably of about 130°-160°C, determined according to the ASTM E28 method. Said resins may be low molecular weight amorphous hydrocarbon resins, in which the number average molecular weight can be comprised between 200-1000. According to one embodiment, the amorphous hydrocarbon resin can be selected from resin obtained or obtainable from the polymerisation of styrene, methylstyrene, vinyltoluene, indene, pentadiene, cyclopentadiene and mixtures thereof. Hydrogenated resins are preferred, in particular cyclopentadiene hydrogenated resins. The amorphous hydrocarbon resins can be mixed in the molten state with the at least one propylene polymer of the central layer (B) in the form of a masterbatch in which the quantity of resin can be comprised between about 40-70% by weight with respect to the total weight of the masterbatch, the remaining part being a propylene polymer, preferably a propylene homopolymer. Generally, the central layer (B) can comprise about 10-20% by weight of masterbatch, preferably about 12-15%, with respect to the total weight of the central layer (B).

In one embodiment, the central layer (B) of the polyolefin film 11 and/or the polyolefin film 14, preferably the central layer of both the polyolefin films 11 and 14, may comprise about 0.1-30% by weight with respect to the total weight of said central layer (B) of at least one regranulated propylene polymer, i.e. of at least one propylene polymer as described above obtained by recovery operations of at least one propylene polymer. Optionally, the central layer (B) of the polyolefin film 11 and/or the polyolefin film 14 may comprise further additives for improving the performance thereof. For example, the central layer (B) can comprise a quantity of less than or equal to about 5% by weight with respect to the total weight of the central layer (B), preferably about 1-4%, of a masterbatch comprising at least one antistatic agent.

In one embodiment, the layer (A) and/ the layer (C) of the polyolefin film 11 may comprise at least one propylene homopolymer, preferably with MFR of less than or equal to about 3 g/10min. (230°C/2.16 kg). In this embodiment, optionally, the layers (A) and (C) may have an identical composition, i.e. may comprise the same at least one propylene homopolymer.

In one particularly preferred embodiment, the layers (A), (B) and (C) of the polyolefin film 11 may comprise at least one propylene homopolymer, preferably with MFR of less than or equal to about 3 g/10min. (230°C/2.16 kg), wherein the layers (A) and (C) may have the same composition, i.e. may comprise the same at least one propylene homopolymer, and the layer (B) can comprise at least one propylene homopolymer different from the propylene homopolymer of layers (A) and (C).

In a further embodiment, layer (A) and/or layer (C) of the polyolefin film 14, preferably both, may comprise at least one copolymer of propylene independently selected from copolymers of propylene with at least one comonomer selected from ethylene, linear or branched C4-C12 alpha-olefins, and mixtures thereof, preferably selected from propylene/ethylene copolymers, comprising 0.5-25% by weight of comonomer. In this embodiment, optionally, the layers (A) and (C) of the polyolefin film 14 may have an identical composition, i.e. may comprise the same at least one copolymer of propylene. This embodiment of the adhesive material is particularly preferred since, with a same surface treatment (where provided), the presence of a copolymer of propylene as described above in at least one of the layers (A) or (C) increases the affinity of said layer towards the adhesive layer 15 and/or the adhesive layer 13.

In a further embodiment, the polypropylene film 14 may have a transmittance ≤ 30%, measured as described in the following. According to this embodiment, the polyolefin film 14 may comprise about 20-45% by weight, preferably about 23-40% by weight, of at least one pigmenting masterbatch, preferably comprising at least one inorganic pigment, more preferably comprising titanium dioxide. In one embodiment, the pigmenting masterbatch may comprise about 60% by weight of titanium dioxide with respect to the weight of the masterbatch.

Said pigmenting masterbatch can be comprised in the central layer B of the polyolefin film 14.

The polymers of propylene useful for the preparation of the layers (A), (B) and (C) can be prepared by polymerisation with Ziegler-Natta catalysts or with metallocene-based catalysts, according to processes known in the art. Said polymers are normally available on the market.

Optionally, the polyolefin film 11 and/or 14 may be a BOPP film comprising a number of layers greater than 3, the further layers being interposed between the central layer (B) and at least one of the outer layers (A) or (C).

In one embodiment, the polyolefin film 11 and/or 14 may be a BOPP film as described above, characterised by heat-shrink values independently selected from values of less than or equal to about 5% in the longitudinal and/or transverse direction, preferably less than or equal to about 3%. In one embodiment, the heat-shrink values may be selected from values comprised in the range of about 0-5% in the longitudinal direction (MD) and in the range of about 0-3% in the transverse direction (TD). According to this embodiment, the polyolefin film 11 and/or 14 may be a thermostable film in the transverse direction and the longitudinal direction, which undergoes a limited dimensional variation when subjected to heating. This property is particularly advantageous for leaving unaltered the layer 12 comprising ink during the lamination of the films. In one embodiment, the multilayer adhesive material according to the invention can also be characterised by heat-shrink values in MD and/or TD as described above. In one embodiment the layer (A) and/or the layer (C) of the polyolefin film 11 and/or the polyolefin film 14 can have a thickness of about 2 - 8% with respect to the overall thickness of the film. In one embodiment the layer (A) and the layer (C) of the polyolefin film 11 and/or the polyolefin film 14 can have an equal thickness.

The polyolefin films 11 and 14 are available on the market and can preferably be obtained by means of extrusion and subsequent simultaneous or sequential, preferably simultaneous, biaxial stretching in the machine direction (MD) and in the transverse direction to the machine (TD).

According to one embodiment, the polyolefin film 11 and/or the polyolefin film 14 comprising at least three layers A/B/C may be obtained through a simultaneous stretching process comprising the steps of:
(i) co-extruding, preferably in a flat die extruder, the components comprised in the at least three layers (A), (B) and (C), obtaining a multilayer sheet;
(ii) quenching said multilayer sheet on a roller at a temperature of about 10°-40°C;
(iii) heating said multilayer sheet with heating elements maintained at a temperature of about 100°-500°C, preferably about 100°-150°C;
(iv) subjecting said multilayer sheet to simultaneous biaxial stretching without contact with metal rollers inside a stretching frame, according to the following sub-steps:
   (iv.a) preheating: heating the multilayer sheet to the temperature of about 150°-180°C, preferably about 160°-175°C, maintaining the speed and the width of the sheet constant (i.e. maintaining the stretching ratios in MD and TD both equal to 1);
   (iv.b) stretching: subjecting the multilayer sheet to simultaneous biaxial stretching at the temperature of about 120-165°C, preferably about 150°-160°C, bringing the longitudinal (MD) and transverse (MD) stretching ratios to independently selected values in the range of about 3 - 10, preferably about 5.5 - 8; and
   (iv.c) stabilisation: maintaining the biaxially oriented multilayer film at a temperature of about 120°-180°C, preferably about 150°-170°C, reducing the stretching ratio in the MD direction and in the TD direction, obtaining a biaxially oriented multilayer film;
(v) cooling the biaxially oriented multilayer film.

During step (i) the components described above comprised in the at least three layers (A), (B) and (C) are co-extruded so as to form a multilayer sheet having a thickness of about 1-4 mm.

Subsequently, in step (ii) the multilayer sheet is quenched on a metal roller maintained at a temperature of about 10°-40°C.

During step (iii) the multilayer sheet is heated with radiating elements, preferably with infra-red rays, maintained at a temperature of about 100°-500°C, preferably of about 100°-150°C.

Subsequently, in step (iv) the multilayer sheet is subjected to simultaneous biaxial stretching without contact with metal rollers, i.e. without placing the multilayer sheet directly in contact with heated surfaces during the stretching operation. Preferably, to actuate step (iv) a simultaneous biaxial stretching on flat die filming process can be used, even more preferably, for this step, Lisim® (Linear Motor Simultaneous Stretching) technology can be used. This technology uses a simultaneous biaxial stretching process, for example as described in US4,853,602 and subsequent patents. During the simultaneous biaxial stretching step (iv) the edges of the sheet are coupled to the stretching frame by means of a series of grippers or clamps independently guided by synchronous linear induction motors, each gripper or clamp sliding on a rail and being drawn by a permanent magnet or by a pair of permanent magnets, pushed by the magnetic wave created by the polar expansions of the motors; each section of the stretching frame having a series of synchronous linear induction motors arranged contiguously powered by alternating currents with phase and frequency modulated so as to continuously vary the speed of the clamps (or grippers) and therefore the longitudinal stretching ratios of the film; the transverse stretching ratios being adjusted by changing the divergence of the rails on which the grippers or clamps slide.

By appropriately reducing the stretching ratios both in the TD direction and in the MD direction during sub-step (iv.c) it is possible to obtain a biaxially oriented multilayer film that is heat-shrinkable or thermostable in at least one direction (MD and/or TD). By reducing in sub-step (iv.c) the stretching ratio in MD and in TD by values independently greater than or equal to about 15%, preferably greater than or equal to about 17% with respect to the maximum value of the stretching ratio in the same direction used in step (iv.b) it is possible to obtain a BOPP film with heat-shrink values independently selected from values of less than or equal to about 5% in the longitudinal and transverse direction, preferably less than or equal to about 3%. According to one embodiment, a person skilled in the art can vary the stretching ratios in MD and TD so as to obtain a biaxially oriented film with heat-shrink values independently selected from about 0-5% in the longitudinal direction (MD) and about 0-3% in the transverse direction (TD).

The longitudinal stretching ratio (MD) is defined by the ratio between the outlet speed of the multilayer film from the stretching frame (oven) and the inlet speed of the multilayer sheet into the stretching frame (oven).

The transverse stretching ratio (MD) is defined by the ratio between the width of the multilayer film at the outlet of the stretching frame (oven) and the width of the film at the inlet of the stretching frame (oven).

During step (v) of the process, the biaxially oriented multilayer film can be cooled using air at a temperature of about 25°-60°C, maintaining the stretching ratios in MD and TD constant.

The possibility allowed by the simultaneous stretching apparatus to vary the longitudinal stretching ratio (MD) within a wide range of values allows improved mechanical properties of the multilayer film in the longitudinal direction to be obtained.

In a further embodiment, the polyolefin film 11 and/or 14 comprising at least three layers A/B/C may be obtained through a sequential stretching process comprising the steps of:
(i) co-extruding, preferably in a flat die extruder, the components comprised in the at least three layers (A), (B) and (C), obtaining a multilayer sheet;
(ii) quenching said multilayer sheet on a roller at a temperature of about 10°-40°C;
(iii) heating said multilayer sheet with heating elements maintained at a temperature of about 100°-500°C, preferably about 100°-150°C;
(iv) subjecting said multilayer sheet to sequential biaxial stretching according to the following sub-steps:
   (iv.a) preheating: heating the multilayer sheet to the temperature of about 100°-150°C, preferably about 110°-130°C, maintaining the speed and the width of the sheet constant (i.e. maintaining the stretching ratios in MD and TD both equal to 1);
   (iv.b) stretching: subjecting the multilayer sheet to longitudinal stretching (MD) at the temperature of about 70°-120°C, preferably about 80°-100°C, bringing the longitudinal stretching ratio (MD) to independently selected values in the range of about 3 - 10, preferably about 5.5 - 8, obtaining a mono-oriented multilayer film;
   (iv.c) stabilisation: maintaining the mono-oriented multilayer film at a temperature of about 110°-130°C, preferably about 115°-120°C, reducing the stretching ratio in the MD direction;
   (iv.d) pre-heating: heating the mono-oriented multilayer film to the temperature of about 150°-190°C, preferably about 160°-180°C, keeping constant the speed and the width of the mono-oriented multilayer film;
   (iv.e) stretching: subjecting the mono-oriented multilayer film to transverse stretching (TD) at the temperature of about 130°-170°C, preferably about 150°-160°C, bringing the transverse stretching (TD) ratio to independently selected values in the range of about 7 - 8, preferably about 7.1 - 7.6;
   (iv.f) stabilisation: maintaining the biaxially oriented multilayer film at a temperature of about 150°-180°C, preferably about 160°-170°C, reducing the stretching ratio in the TD direction;
(v) cooling the biaxially oriented multilayer film.

Steps (i), (ii), (iii) and (v) can be performed as described above.

In step (iv) the multilayer sheet is subjected to sequential biaxial stretching. During the longitudinal stretching step (iv.b) the multilayer sheet can be passed through rollers having a wrap angle between them comprised between 168° and 250°C. The longitudinal stretching takes place by increasing the speed of one roller with respect to the immediately preceding roller.

During the transverse stretching step (iv.e) the edges of the sheet are coupled to the stretching frame by means of a series of grippers or clamps solidly constrained to each other, mounted on a continuous chain drawn by a motor, wherein said grippers or clamps slide on movable guides. The transverse stretching ratio can be adjusted by adjusting the divergence of the guides.

By appropriately reducing the stretching ratios both in the TD direction and in the MD direction during the sub-steps (iv.c) and (iv.f) it is possible to obtain a biaxially oriented multilayer film that is heat-shrinkable or thermostable in at least one direction (MD and/or TD). By reducing in sub-step (iv.c) and (iv.f) the stretching ratio in MD and in TD by values independently of greater than or equal to about 15%, preferably greater than or equal to about 17% with respect to the maximum value of the stretching ratio in MD and TD used in step (iv.b) and in step (iv.e), respectively, it is possible to obtain biaxially oriented multilayer films with heat-shrink values independently selected from values of less than or equal to about 5% in the longitudinal and transverse direction, preferably less than or equal to about 3%. According to one embodiment, a person skilled in the art can reduce the stretching ratios in MD and/or TD so as to obtain a biaxially oriented film with heat-shrink values independently selected from about 0-5% in the longitudinal direction (MD) and about 0-3% in the transverse direction (TD).

The longitudinal stretching ratio (MD) is defined by the ratio between the outlet speed of the multilayer film from the longitudinal stretching frame (MDO) and the inlet speed of the multilayer sheet into the longitudinal stretching frame (MDO).

The transverse stretching ratio (MD) is defined by the ratio between the width of the biaxially oriented multilayer film at the outlet of the stretching frame (oven) and the width of the mono-oriented multilayer film at the inlet of the stretching frame (oven).

A BOPP film obtained (or obtainable) by a simultaneous stretching process as described above and having the characteristics described above is particularly suitable for the preparation of the multilayer adhesive material according to the present invention.

The multilayer adhesive material for food contact according to the invention may have a variable thickness. In one embodiment, the multilayer adhesive material may have a thickness of about 35-65 µm, preferably about 40-55 µm, more preferably about 48-52 µm.

The polyolefin film 11 and the polyolefin film 14 may have the same or a different thickness as or from each other; when they have a different thickness, the thickness of the polyolefin film 14 may be greater than or equal to the thickness of the polyolefin film 11.

The multilayer adhesive material for food contact according to the invention may be produced by means of techniques and equipment used in the sector for the coupling (lamination) of polyolefin films. For example, the layer 12 comprising at least one ink can be arranged (applied) on the surface of the polyolefin film 11 through flexographic printing. The printed surface of the polyolefin film 11 can be coupled (laminated) to the surface 14a of the polyolefin film 14 using the adhesive layer 13 as glue, by means of appropriate equipment for the lamination of plastic films. Subsequently, the adhesive layer 15 comprising the pressure-sensitive adhesive can be applied, preferably spread, onto the surface 14b of the polyolefin film 14. A person skilled in the art, based on his/her own knowledge, is able to actuate the process conditions for obtaining the multilayer adhesive material according to the invention.

The multilayer adhesive material according to the invention is particularly useful for preparing a roll of adhesive material. The term "roll of adhesive material" relates in the present description and appended claims to a continuous adhesive material wound onto itself that can be cut manually, by specific equipment or specific tools at the time of use. Preferably, the adhesive material is wound onto itself without a liner (roll of linerless adhesive material). By way of non-limiting example, the definition of rolls of adhesive material includes an adhesive band wound in a roll and a roll of adhesive material from which labels are obtained. The roll of multilayer adhesive material according to the invention has the advantage of being able to be easily unwound without leaving residues of the adhesive layer 15 on the surface of the polyolefin film 11. Furthermore, thanks to the mechanical properties of the material, the roll may also be used on taping/labelling machines that operate at high speeds, subjecting the material to high tensions without causing the breakage thereof.

In one embodiment, the roll of adhesive material according to the invention can be obtained by cutting the multilayer adhesive material according to the invention parallel to the longitudinal direction (MD) of the polyolefin films 11 and 14 and winding it onto itself through equipment normally used in the sector.

The multilayer adhesive material according to the invention, also in roll form, may have a variable width according to the type of product to wrap/group. In one embodiment, the width of the multilayer adhesive material may be about 25-75 mm. By way of example, rolls may be prepared with widths of 25-38 mm for mechanical applications and widths of up to 75 mm for manual applications. Likewise, the length of the roll of multilayer adhesive material according to the invention can vary within a wide range of values, mainly according to the type of application, manual or mechanical, for which the roll of adhesive material is used.

The materials comprised in the layers of the multilayer adhesive material according to the invention are suitable for food contact or, when not suitable for food contact, they are shielded so as to prevent contact thereof with food. For example, the at least one ink of the layer 13 may not be suitable for contact with food, however as the layer 13 is interposed between the polyolefin films 11 and 14, the ink does not enter into contact with food either directly or indirectly by transfer onto the surface of the polyolefin film 11 when the multilayer adhesive material is wound in a roll. Therefore, the multilayer adhesive material according to the present invention, also in roll form, is particularly suitable for wrapping/grouping food products, in particular horticultural products, intended for human and/or animal food, by placing the adhesive layer 15 in direct contact with the food product to be wrapped/grouped.

In the present description and appended claims the term "horticultural product" relates to a fruit and/or a vegetable.

In a further aspect thereof, the present invention therefore relates to the use of a multilayer adhesive material as previously described for wrapping at least one food product, preferably a plurality of food products, by placing the adhesive layer 15 in direct contact with the at least one food product. The use of the multilayer adhesive material according to the invention enables significantly reducing the packaging materials used in the (agri- )food sector, hence reducing the environmental and economic impact of the packaging waste.

In one embodiment, the use according to the invention is for wrapping at least one food product, in which said at least a food product is at least a horticultural product.

In one embodiment, the present invention relates to the use of a multilayer adhesive material as previously described for grouping a plurality of products, preferably horticultural products, by placing the adhesive layer 15 in direct contact with the products.

The multilayer adhesive material wrapped around the at least one food product can be fastened by overlapping the adhesive layer 15 with the polyolefin film 11 ("adhesive on back" closure) or by coupling the adhesive layer 15 present at two ends of the multilayer adhesive material ("adhesive on adhesive" closure), and exerting light pressure.

The multilayer adhesive material according to the invention can be used manually or, preferably through suitable apparatuses for manual application. Alternatively, at industrial level, the multilayer adhesive material can be used by the taping/labelling/packaging machines normally used in the packaging sector.

The adhesive material according to the invention has been shown to be particularly suited to wrapping and/or grouping food products, in particular horticultural products, by fixing the material in the "adhesive on adhesive" configuration, typical of the industrial use made using taping/labelling/packaging machines as the closure surface between the two layers of adhesive is able to withstand the traction even at the chilled storage temperatures of the products.

Advantageously, the pressure necessary for fastening the adhesive layer 15 according to one of the above configurations is sufficiently reduced so as not to damage the products.

In a further aspect thereof, the present invention relates to a food product, preferably a fruit or vegetable product, wrapped in a multilayer adhesive material for food contact as previously described, in which the adhesive layer 15 of said multilayer adhesive material is placed in direct contact with the food product.

It has also been experimentally verified that the closure of the multilayer adhesive material remains intact at ambient temperature and at the chilled storage temperatures for horticultural products, as well as in the presence of condensation on the product to be grouped.

The present invention will be described below by means of illustrative and therefore non-limiting examples of the invention itself.

### Measurement methods

The following methods are used to determine the properties indicated in the description or the examples.

Hot shear. Apparatus used: a machine for shear test thermostatted at 40°C. Take 5 samples of adhesive material, having a length of about 100 mm, at a short distance from one another. Longitudinally cut a test piece having a width of about 25 mm from the samples of adhesive material. Remove, using toluene, any residues of adhesive present on the steel test plates of the machine, clean them with ethyl alcohol, dry them using absorbent paper and position them in the grooved template for application of the band on the plates. Apply each sample on the two test plates, with each sample projecting by about 10 ÷ 15 mm with respect to the transversal notch on the plates and using as reference the longitudinal notches on the plates. During the application, exert a minimum pressure on the adhesive material, avoiding all contact with the adhesive layer which is applied on the upper test plate and reducing to a minimum the formation of air bubbles. Apply a PVC band or strapping band above the sample to prevent deformation thereof during the test. Cut the portion of adhesive material on the test plate using as reference the notches on the plate itself. Pass a cylindrical metal roller clad with rubber with a diameter of at least 50 mm and a weight of about 2 kg to and fro twice on the test sample. Position the test plates in the machine, reset the timer and rest a weight of 3 kg on the support predisposed internally of the machine. Wait for about 20 ÷ 30 minutes to allow the machine to reach a uniform temperature and for the adhesive to grip on the plates and then reset the timer. Release the weights to start the test. When the band is detached from the plates, the machine timer automatically stops and measures the hot shear value for the tested sample. Eliminate the minimum and maximum values obtained in the 5 tests and take the arithmetic mean of the values obtained for the 3 remaining samples as the hot shear value of the adhesive material.

### EXAMPLE 1

For the production of a multilayer adhesive material with a thickness of about 50 µm, a polyolefin film 11 having the properties indicated in Table 1a and 1b was printed on a surface with solvent-based inks using the flexographic technique. The layer of ink was discontinuous. The printed surface of the polyolefin film 11 was coupled (laminated) to the surface 14a of a polyolefin film 14 having the properties indicated in Table 2a and 2b. The surface 14a was subjected to a flame treatment, and the surface 14b was subjected to a corona treatment.

For the lamination Polurene FP133B/FP412S (S.A.P.I.C.I. Spa) was used, which is a solvent-free two-component polyurethane adhesive. The adhesive was applied in a continuous layer in a quantity of about 2.5 g/m², at a variable temperature of about 45°-60°C.

The surface 14b of the polyolefin film 14 was covered with a continuous layer (about 18±2 g/m²) of a PSA hot-melt adhesive comprising (percentages referring to the adhesive):
(a) 44.8% by weight of a SIS thermoplastic elastomer (Quintac® 3620, Zeon Corporation, MFR = 6.0 g/10 min. (220°C/5Kg));
(b) 44.8% by weight of a resin constituted by a mixture 3:1 of Quintone R100 (Tg = 96°C) and Quintone S100 (Tg = 95°C) (both Zeon Corporation);
(c) 4.5% by weight of a plasticiser; and
(d) 5.6% by weight of a tackifier; and
(e) 0.2% by weight of an antioxidant.

The PSA hot-melt adhesive used has a hot shear (steel 40°C) of 342 min. and a rolling ball tack of 1.0 cm.

**Table 1a - Polyolefin film 11**

| *Composition* | | |
|---|---|---|
| (A) | 99% | Moplen™ HP422H (LyondeIIBaseII) Polypropylene homopolymer |
| | | MFR 2.0 g/10 min (230°C/2.16 Kg; ISO 1133-1) |
| | 1% | Constab AB06001 PP (Constab Polyolefin Additives GmbH) |
| (B) | 85% | Moplen™ HP520H (LyondeIIBaseII) Polypropylene homopolymer |
| | | MFR 2.0 g/10 min (230°C/2.16 Kg; ISO 1133-1) |
| | 15% | Regranulated propylene homopolymer |
| (C) | 99% | Moplen™ HP422H (LyondeIIBaseII) Polypropylene homopolymer |
| | | MFR 2.0 g/10 min (230°C/2.16 Kg; ISO 1133-1) |
| | 1% | Constab AB06001 PP (Constab Polyolefin Additives GmbH) |

**Table 1b - Polyolefin film 11**

| *Properties* | | | |
|---|---|---|---|
| Film thickness | | µm | 20 |
| Gloss | ASTM D2457 | % | 95 |
| Haze | ASTM D1003 | % | 1.1 |
| Heat-shrink (MD/TD) | OPMA TC4(a) 130°C/30 min. | % | 5.0/2.0 |
| Modulus of elasticity (MD/TD) | ASTM D882 | N/mm² | 2400/3600 |
| Tensile strength (MD/TD) | ASTM D882 | N/mm² | 170/260 |
| Ultimate elongation (MD/TD) | ASTM D882 | N/mm² | 160/70 |

**Table 2a - Polyolefin film 14**

| *Composition* | | |
|---|---|---|
| (A) | 98% | Adsyl™ 5C39F (LyondeIIBaseII) Propylene copolymer |
| | 2% | Constab AB06084 PPR (Constab Polyolefin Additives GmbH) |
| (B) | 45% | Moplen™ HP520H (LyondeIIBaseII) Polypropylene homopolymer |
| | | MFR 2.0 g/10 min (230°C/2.16 Kg; ISO 1133-1) |
| | 25% | Regranulated propylene homopolymer |
| | 35% | Masterbatch White 94 |
| (C) | 98% | Adsyl™ 5C39F (LyondeIIBaseII) |
| | | Propylene copolymer |
| | 2% | Constab AB06084 PPR (Constab Polyolefin Additives GmbH) |

**Table 2b - Polyolefin film 14**

| *Properties* | | | |
|---|---|---|---|
| Film thickness | | µm | 30 |
| Gloss | ASTM D2457 | % | 50 |
| Transmittance | ASTM D1003 | % | 25 |
| Heat-shrink (MD/TD) | OPMA TC4(a) 130°C/30 min. | % | 3.0/1.0 |
| Wettability ((A)/(C)) | ASTM 2578 | Dyne/cm | 40/40 |
| Modulus of elasticity (MD/TD) | ASTM D882 | N/mm² | 2600/3000 |
| Tensile strength (MD/TD) | ASTM D882 | N/mm² | 130/160 |
| Ultimate elongation (MD/TD) | ASTM D882 | N/mm² | 140/120 |

The multilayer adhesive material thus obtained was wound in rolls of linerless adhesive band 38 mm wide and 66 m long and used to group leeks. The band was wrapped about the leaves and manually closed by superposing the two ends with an "adhesive on adhesive" closure and by exerting a light pressure.

To verify the seal of the closure, the closure point was marked on both sides of the band and the length of the band surface initially closed measured that has detached after determined time intervals (30 min. and 3 days) while keeping the banded products at ambient temperature (about 25°C) and at the chilled storage temperature of the product (about 2°/4°C). The adhesive band was solidly closed, i.e. the length of the detachment surface was 0 mm at 30 min. and after 3 days, both in products kept at ambient temperature and in products kept in a refrigerator. When removed from the products, the band did not leave any adhesive residues on the products.

## Claims

1. Multilayer adhesive material for food contact comprising:
- a polyolefin film 14 having a first surface 14a and a second surface 14b opposite the first;
- a polyolefin film 11 coupled to the polyolefin film 14 on the first surface 14a by means of a layer 13 comprising at least one adhesive;
- a layer 12 comprising at least one ink interposed between the polyolefin films 11 and 14; and
- an adhesive layer 15 comprising at least one pressure-sensitive hot-melt adhesive arranged on the second surface 14b of the polyolefin film 14, wherein the at least one pressure-sensitive hot-melt adhesive has a hot shear value ≥ 60 min., preferably ≥ 100 min., more preferably ≥ 300 min., the hot shear value being measured on steel at 40°C according to the method disclosed in the description.

2. The multilayer adhesive material for food contact according to claim 1, wherein the adhesive layer (15) comprises at least one pressure-sensitive hot-melt adhesive comprising:
(a) 12.0 - 55.0% by weight, preferably 44.0 - 52.0%, of at least a thermoplastic elastomer, preferably at least a styrenic block copolymer selected from among styrene-isoprene-styrene copolymer (SIS), styrene-isoprene/butadiene-styrene copolymer (SIBS), styrene-butadiene-styrene copolymer (SBS), styrene-ethylenebutylene-styrene copolymer (SEBS), styrene-butadiene rubber (SBR) and mixtures thereof, preferably at least a styrene-isoprene-styrene copolymer; and
(b) 45.0 - 88.0% by weight, preferably 48.0 - 56.0% by weight, of at least a resin selected from among colophony resins, polyterpene resins, hydrocarbon resins and mixtures thereof,
wherein the percentages by weight are expressed with respect to the sum of the weights of components (a) and (b).

3. The multilayer adhesive material for food contact according to claim 1 or 2, wherein the adhesive layer 15 comprises at least a PSA hot-melt adhesive having at least one of the following properties:
- rolling ball-tack (ASTM D3121) ≤ 2.0 cm; and/or
- a softening temperature (ASTM D36) of 75°-105°C; and/or
- viscosity 5000 - 15000 mPas (ASTM D3236, 160°C, spindle no. 4-28, speed 20 rpm).

4. The multilayer adhesive material for food contact according to any one of claims 1-3, wherein the adhesive material comprises a further layer 16 comprising at least a detaching agent, wherein said layer 16 is arranged on the surface of the polyolefin film 11 opposite the surface on which the polyolefin film 14 is coupled.

5. The multilayer adhesive material for food contact according to any one of claims 1-4, wherein the layer (12) is arranged on the surface of the polyolefin film (11) and is coupled to the polyolefin film (14).

6. The multilayer adhesive material for food contact according to any one of claims 1-5, wherein the polyolefin film (11) and/or the polyolefin film (14) is a BOPP film comprising at least three layers A/B/C, wherein:
- the layer (A) and the layer (C) comprise at least one propylene polymer independently selected from propylene homopolymer, copolymers of propylene with at least one comonomer selected from among ethylene and linear or branched C4-C12 alpha-olefins, and mixtures thereof; and
- the layer (B) comprises at least one propylene polymer with MFR ≤3 g/10min. (230°C/2.16 kg) selected from propylene homopolymer, copolymers of propylene with at least one comonomer selected from ethylene and linear or branched C4-C12 alpha-olefins, and mixtures thereof.

7. The multilayer adhesive material for food contact according to claim 6, wherein the layer (A) and/or the layer (C) of the polyolefin film (14) comprise at least one copolymer of propylene independently selected from copolymers of propylene with at least one comonomer selected from ethylene, linear or branched C4-C12 alpha-olefins, and mixtures thereof, preferably selected from propylene/ethylene copolymers, comprising 0.5-25% by weight of comonomer.

8. The multilayer adhesive material for food contact according to any one of claims 1-7, wherein the polyolefin films (11) and (14) are BOPP films, **characterised by** heat-shrink values independently selected from values ≤ 5% in the longitudinal and/or transverse direction, preferably ≤ 3%.

9. The multilayer adhesive material for food contact according to any one of claims 1-8, wherein the polypropylene film (14) has a transmittance ≤ 30%.

10. The multilayer adhesive material for food contact according to claim 9, wherein the polyolefin film 14 can comprise 20-45
% by weight of at least one pigmenting masterbatch, comprising at least one inorganic pigment, preferably comprising titanium dioxide.

11. The multilayer adhesive material according to any one of claims 1-10 wherein said material is wrapped about itself in a roll form, preferably a linerless roll.

12. A use of a multilayer adhesive material for food contact according to any one of claims 1-11 for wrapping at least one food product by placing the adhesive layer (15) in direct contact with the at least one food product.

13. The use of the multilayer adhesive material according to claim 12, wherein said food product is at least a horticultural product.

14. The use of the multilayer adhesive material according to claim 12 or 13, for grouping a plurality of products by placing the adhesive layer (15) in direct contact with the products.

15. A food product, preferably a horticultural product, wrapped in a multilayer adhesive material for food contact as described in any one of claims 1-11, wherein the adhesive layer (15) of said multilayer adhesive material is placed in direct contact with the food product.

## Patentansprüche

1. Mehrschichtiges Haftmaterial für Lebensmittelkontakt, das Folgendes umfasst:
- einen Polyolefinfilm 14 mit einer ersten Oberfläche 14a und einer zweiten Oberfläche 14b gegenüber der ersten,
- einen Polyolefinfilm 11, gekoppelt mit dem Polyolefinfilm 14 auf der ersten Oberfläche 14a mit Hilfe einer Schicht 13, die mindestens einen Klebstoff umfasst,
- eine Schicht 12, die mindestens eine Tinte umfasst, angeordnet zwischen den Polyolefinfilmen 11 und 14, und
- eine Haftschicht 15, die mindestens einen druckempfindlichen Heißkleber umfasst, angebracht auf der zweiten Oberfläche 14b des Polyolefinfilms 14, wobei der mindestens eine druckempfindliche Heißkleber einen Heißabscherwert ≥ 60 min., vorzugsweise ≥100 min., stärker bevorzugt ≥ 300 min., hat, wobei der Heißabscherwert bei 40°C an Stahl mit dem in der Beschreibung offenbarten Verfahren gemessen wird.

2. Das mehrschichtige Haftmaterial für Lebensmittelkontakt gemäß Anspruch 1, wobei die Haftschicht (15) mindestens einen druckempfindlichen Heißkleber umfasst, der Folgendes umfasst:
(a) 12,0-55,0 Gewichtsprozent, vorzugsweise 44,0-52,0 Gewichtsprozent, mindestens eines thermoplastischen Elastomers, vorzugsweise mindestens eines Styrol-BlockCopolymers, gewählt aus Styrol-Isopren-Styrol-Copolymer (SIS), Styrol-Isopren/Butadien-Styrol-Copolymer (SIBS), Styrol-Butadien-Styrol-Copolymer (SBS), Styrol-Ethylen-Butylen-Styrol-Copolymer (SEBS), Styrol-Butadien-Kautschuk (SBR) und Mischungen davon, vorzugsweise mindestens ein Styrol-Isopren-Styrol-Copolymer; und
(b) 45,0-88,0 Gewichtsprozent, vorzugsweise 48,0-56,0 Gewichtsprozent, mindestens eines Harzes, gewählt aus Kolophoniumharzen, Polyterpenharzen, Kohlenwasserstoffharzen und Mischungen davon,
worin die Gewichtsprozentsätze bezogen auf die Summe des Gewichts der Komponenten (a) und (b) ausgedrückt sind.

3. Das mehrschichtige Haftmaterial für Lebensmittelkontakt gemäß Anspruch 1 oder 2, wobei die Haftschicht 15 mindestens einen PSA-Heißkleber umfasst, der mindestens eine der folgenden Eigenschaften hat:
- Haftung einer rollenden Kugel (ASTM D3121) ≤ 2,0 cm und/oder
- eine Erweichungstemperatur (ASTM D36) von 75°-105°C und/oder
- eine Viskosität von 5000-15000 mPas (ASTM D3236, 160°C, Spindel Nr. 4-28, Geschwindigkeit 20 U/min).

4. Das mehrschichtige Haftmaterial für Lebensmittelkontakt gemäß einem beliebigen der Ansprüche 1-3, worin das Haftmaterial eine weitere Schicht 16 umfasst, die mindestens ein Trennmittel umfasst, worin die Schicht 16 auf der Oberfläche des Polyolefinfilms 11 gegenüber der Oberfläche angeordnet ist, mit welcher der Polyolefinfilm 14 gekoppelt ist.

5. Das mehrschichtige Haftmaterial für Lebensmittelkontakt gemäß einem beliebigen der Ansprüche 1-4, worin die Schicht (12) auf der Oberfläche des Polyolefinfilms (11) angeordnet und mit dem Polyolefinfilm (14) gekoppelt ist.

6. Das mehrschichtige Haftmaterial für Lebensmittelkontakt gemäß einem beliebigen der Ansprüche 1-5, worin der Polyolefinfilm (11) und/oder der Polyolefinfilm (14) ein BOPP-Film sind, der mindestens drei Schichten A/B/C umfasst, worin:
- die Schicht (A) und die Schicht (C) mindestens ein Propylenpolymer umfassen, unabhängig gewählt aus Propylenhomopolymer, Copolymeren von Propylen mit mindestens einem Comonomer, gewählt aus Ethylen und linearen oder verzweigten C4-C12-alpha-Olefinen, und Mischungen davon; und
- die Schicht (B) mindestens ein Propylenpolymer mit MFR ≤3g/10 min. (230°C/2,16 kg) umfasst, gewählt aus Propylenhomopolymer, Copolymeren von Propylen mit mindestens einem Comonomer, gewählt aus Ethylen und linearen oder verzweigten C4-C12-alpha-Olefinen, und Mischungen davon.

7. Das mehrschichtige Haftmaterial für Lebensmittelkontakt gemäß Anspruch 6, worin die Schicht (A) und/oder die Schicht (C) des Polyolefinfilms (14) mindestens ein Copolymer von Propylen umfassen, unabhängig gewählt aus Copolymeren von Propylen mit mindestens einem Comonomer, gewählt aus Ethylen, linearen oder verzweigten C4-C12-alpha-Olefinen und Mischungen davon, vorzugsweise gewählt aus Propylen-Ethylen-Copolymeren, die 0,5-25 Gewichtsprozent Comonomer umfassen.

8. Das mehrschichtige Haftmaterial für Lebensmittelkontakt gemäß einem beliebigen der Ansprüche 1-7, worin die Polyolefinfilme (11) und (14) BOPP-Filme sind, **gekennzeichnet durch** Wärmeschrumpfwerte, die unabhängig gewählt sind aus Werten ≤ 5% in der Längs- und/oder der Querrichtung, vorzugsweise ≤ 3%.

9. Das mehrschichtige Haftmaterial für Lebensmittelkontakt gemäß einem beliebigen der Ansprüche 1-8, worin der Polypropylenfilm (14) einen Durchlässigkeitsgrad ≤ 30% hat.

10. Das mehrschichtige Haftmaterial für Lebensmittelkontakt gemäß Anspruch 9, worin der Polyolefinfilm 14 20-45 Gewichtsprozent mindestens eines Pigmentierungs-Masterbatches umfassen kann, der mindestens ein anorganisches Pigment, vorzugsweise Titandioxid, umfasst.

11. Das mehrschichtige Haftmaterial gemäß einem beliebigen der Ansprüche 1-10, worin das Material in eine Rollenform, vorzugsweise eine Linerless-Rolle, gewickelt ist.

12. Eine Verwendung eines mehrschichtigen Haftmaterials für Lebensmittelkontakt gemäß einem beliebigen der Ansprüche 1-11 zum Einwickeln mindestens eines Lebensmittelprodukts durch Platzierung der Haftschicht (15) in direkten Kontakt mit dem mindestens einen Lebensmittelprodukt.

13. Die Verwendung des mehrschichtigen Haftmaterials gemäß Anspruch 12, wobei das Lebensmittelprodukt mindestens ein Gartenbauprodukt ist.

14. Die Verwendung des mehrschichtigen Haftmaterials gemäß Anspruch 12 oder 13 zur Gruppierung einer Vielzahl von Produkten durch Platzierung der Haftschicht (15) in direkten Kontakt mit den Produkten.

15. Ein Lebensmittelprodukt, vorzugsweise ein Gartenbauprodukt, eingewickelt in ein mehrschichtiges Haftmaterial für Lebensmittelkontakt wie in einem beliebigen der Ansprüche 1-11 beschrieben, wobei die Haftschicht (15) des mehrschichtigen Haftmaterials in direkten Kontakt mit dem Lebensmittelprodukt gebracht wird.

## Revendications

1. Matériau adhésif multicouche pour contact alimentaire comportant :
- un film de polyoléfine (14) ayant une première surface (14a) et une seconde surface (14b) opposée à la première,
- un film de polyoléfine (11) couplé au film de polyoléfine (14) sur la première surface (14a) au moyen d'une couche (13) comportant au moins un adhésif,
- une couche (12) comportant au moins une encre intercalée entre les films de polyoléfine (11 et 14), et
- une couche d'adhésif (15) comportant au moins un adhésif thermofusible sensible à la pression, agencée sur la seconde surface (14b) du film de polyoléfine (14), dans lequel le au moins un adhésif thermofusible sensible à la pression a une valeur de cisaillement à chaud ≥ 60 min., de manière préférée ≥ 100 min., de manière plus préférée ≥ 300 min., la valeur de cisaillement à chaud étant mesurée sur un acier à 40 °C selon le procédé décrit dans la description.

2. Matériau adhésif multicouche pour contact alimentaire selon la revendication 1, dans lequel la couche d'adhésif (15) comporte au moins un adhésif thermofusible sensible à la pression comportant :
(a) 12,0 à 55,0 % en poids, de préférence 44,0 à 52,0 %, d'au moins un élastomère thermoplastique, de préférence au moins un copolymère séquence styrénique choisi parmi un copolymère de styrène-isoprène-styrène (SIS), un copolymère de styrène-isoprène/butadiène-styrène (SIBS), un copolymère de styrène-butadiène-styrène (SBS), un copolymère de styrène-éthylène-butylène-styrène (SEBS), un caoutchouc styrène-butadiène (SBR) et des mélanges de ceux-ci, de préférence au moins un copolymère de styrène-isoprène-styrène, et
(b) 45,0 à 88,0 % en poids, de préférence 48,0 à 56,0 % en poids, d'au moins une résine choisie parmi des résines de colophane, des résines polyterpéniques, des résines hydrocarbonées et des mélanges de celles-ci, dans lequel les pourcentages en poids sont exprimés par rapport à la somme des poids des composants (a) et (b) .

3. Matériau adhésif multicouche pour contact alimentaire selon la revendication 1 ou 2, dans lequel la couche d'adhésif (15) comporte au moins un adhésif thermofusible PSA ayant au moins les propriétés suivantes :
- pégosité à la bille roulante (ASTM D3121) ≤ 2,0 cm, et/ou
- température de ramollissement (ASTM D36) de 75° à 105°C, et/ou
- viscosité de 5 000 à 15 000 mPa (ASTM D3236, 160 °C, broche n° 4-28, vitesse de 20 t/min).

4. Matériau adhésif multicouche pour contact alimentaire selon l'une quelconque des revendications 1 à 3, dans lequel le matériau adhésif comporte une couche supplémentaire (16) comportant au moins un agent de détachement, dans lequel ladite couche (16) est agencée sur la surface du film de polyoléfine (11) opposée à la surface sur laquelle le film de polyoléfine (14) est couplé.

5. Matériau adhésif multicouche pour contact alimentaire selon l'une quelconque des revendications 1 à 4, dans lequel la couche (12) est agencée sur la surface du film de polyoléfine (11) et est couplée au film de polyoléfine (14).

6. Matériau adhésif multicouche pour contact alimentaire selon l'une quelconque des revendications 1 à 5, dans lequel le film de polyoléfine (11) et/ou le film de polyoléfine (14) est un film BOPP comportant au moins trois couches A/B/C, dans lequel :
- la couche (A) et la couche (C) comportent au moins un polymère de propylène choisi indépendamment parmi un homopolymère de propylène, des copolymères de propylène avec au moins un comonomère choisi parmi l'éthylène et des alpha-oléfines en C4 à C12 linéaires ou ramifiées, et des mélanges de ceux-ci, et
- la couche (B) comporte au moins un polymère de polypropylène avec MFR ≤ 3 g/10 min. (230 °C/2,16 kg) choisi parmi un homopolymère de propylène, des copolymères de propylène avec au moins un comonomère choisi parmi l'éthylène et des alpha-oléfines en C4 à C12 linéaires ou ramifiées, et des mélanges de ceux-ci.

7. Matériau adhésif multicouche pour contact alimentaire selon la revendication 6, dans lequel la couche (A) et/ou la couche (C) du film de polyoléfine (14) comportent au moins un copolymère de propylène choisi indépendamment parmi des copolymères de propylène avec au moins un comonomère choisi parmi l'éthylène, des alpha-oléfines en C4 à C12 linéaires ou ramifiées, et des mélanges de ceux-ci, de préférence choisi parmi des copolymères de propylène/éthylène comportant de 0,5 à 25 % en poids de comonomère.

8. Matériau adhésif multicouche pour contact alimentaire selon l'une quelconque des revendications 1 à 7, dans lequel les films de polyoléfine (11) et (14) sont des films BOPP, **caractérisé par** des valeurs de thermo-rétraction choisies indépendamment parmi des valeurs ≤ 5 % dans la direction longitudinale et/ou transversale, de préférence ≤ 3 %.

9. Matériau adhésif multicouche pour contact alimentaire selon l'une quelconque des revendications 1 à 8, dans lequel le film de polypropylène (14) a une transmittance inférieure ou égale à 30 %.

10. Matériau adhésif multicouche pour contact alimentaire selon la revendication 9, dans lequel le film de polyoléfine (14) peut comporter de 20 à 45 % en poids d'au moins un mélange maître de pigmentation, comportant au moins un pigment inorganique, comportant de préférence du dioxyde de titane.

11. Matériau adhésif multicouche selon l'une quelconque des revendications 1 à 10, dans lequel ledit matériau est enroulé sur lui-même sous une forme de rouleau, de préférence un rouleau sans doublure.

12. Utilisation d'un matériau adhésif multicouche pour contact alimentaire selon l'une quelconque des revendications 1 à 11 pour emballer au moins un produit alimentaire en plaçant la couche d'adhésif (15) en contact direct avec le au moins un produit alimentaire.

13. Utilisation du matériau adhésif multicouche selon la revendication 12, dans laquelle ledit produit alimentaire est au moins un produit horticole.

14. Utilisation du matériau adhésif multicouche selon la revendication 12 ou 13, pour regrouper une pluralité de produits en plaçant la couche d'adhésif (15) en contact direct avec les produits.

15. Produit alimentaire, de préférence un produit horticole, emballé dans un matériau adhésif multicouche pour contact alimentaire selon l'une quelconque des revendications 1 à 11, dans lequel la couche d'adhésif (15) dudit matériau adhésif multicouche est placée en contact direct avec le produit alimentaire.
